# EUROPEAN PATENT APPLICATION

(11) **EP 4 682 964 A1**
(43) Date of publication of application: **21.01.2026**
(21) Application number: 25178758.6
(22) Date of filing: 26.05.2025
(51) Int. Cl.: H01M 4/04, H01M 4/62, H01M 4/66, H01M 4/70, H01M 10/0567, H01M 10/0587, H01M 4/02

(54) **ELECTRICAL ENERGY STORAGE DEVICE, AND MANUFACTURING METHOD FOR NEGATIVE ELECTRODE AND ELECTRICAL ENERGY STORAGE DEVICE**

(30) Priority: 17.07.2024 JP 2024113754
(71) Applicant: Prime Planet Energy & Solutions, Inc., Chuo-ku, Tokyo 103-0022 (JP)
(72) Inventor: TAMURA, Kazuaki, Tokyo, 103-0022 (JP); ISOBE, Yoshihide, Tokyo, 103-0022 (JP); TSUKAMOTO, Kentaro, Tokyo, 103-0022 (JP); SUMI, Kyogo, Tokyo, 103-0022 (JP); MAGARI, Yoshifumi, Tokyo, 103-0022 (JP); MATSUTA, Shigeki, Tokyo, 103-0022 (JP)
(74) Representative: Kuhnen & Wacker Patent- und Rechtsanwaltsbüro PartG mbB

(57) **Abstract**

An electrical energy storage device (100) disclosed herein includes an electrode body (20) including a positive electrode (22) and a negative electrode (24). The negative electrode (24) includes a negative electrode current collector (24c) and a negative electrode active material layer (24a). When the negative electrode active material layer (24a) is divided into two virtually in a thickness direction (T), in which a region that is close to the negative electrode current collector (24c) is a lower layer region (A1) and a region that is far from the negative electrode current collector (24c) is an upper layer region (A2), the content of a sodium element in the lower layer region (A1) is lower than the content of the sodium element in the upper layer region (A2).

## Description

### BACKGROUND OF THE DISCLOSURE

### 1. Field

The present disclosure relates to an electrical energy storage device, and a manufacturing method for a negative electrode and the electrical energy storage device.

### 2. Background

An electrical energy storage device that includes an electrode body including a positive electrode and a negative electrode, and a nonaqueous electrolyte solution including a film formation agent has been known conventionally. In the electrical energy storage device, typically at initial charging, a part of the electrolyte solution (for example, film formation agent) is decomposed and a film including a decomposition product thereof (solid electrolyte interface film: SEI film) is formed on a surface of a negative electrode active material layer. By this film, an interface between the negative electrode active material layer and the electrolyte solution is stabilized.

Incidentally, the negative electrode active material layer may contain a sodium element as an impurity derived from a binder, a thickener, or the like used at the manufacture of the negative electrode. The sodium element can react with the film formation agent in the electrolyte solution and be deposited in the negative electrode active material layer as a part of the film (see Japanese Patent Application Publication No. 2023-43975).

### SUMMARY

An electrical energy storage device with the capacity increased recently includes an electrode body that is long in width. Therefore, according to the present inventors' examination, the film formation agent is trapped little by little by the sodium element in a process in which the electrolyte solution permeates into a central part of the electrode body in a width direction and the amount of the film formation agent that reaches the central part of the electrode body decreases. It has been newly turned out that the amount of formation of the film in the central part of the electrode body becomes relatively small and the thermal stability tends to decrease.

The present disclosure has been made in view of the above circumstances, and an object is to provide an electrical energy storage device with improved thermal stability.

An electrical energy storage device according to the present disclosure includes an electrode body including a positive electrode and a negative electrode, and an electrolyte solution. The negative electrode includes a negative electrode current collector, and a negative electrode active material layer fixed on the negative electrode current collector. The negative electrode active material layer contains a sodium element. When the negative electrode active material layer is divided into two virtually in a thickness direction, in which a region that is relatively close to the negative electrode current collector is a lower layer region and a region that is relatively far from the negative electrode current collector is an upper layer region, a content of the sodium element in the lower layer region is lower than a content of the sodium element in the upper layer region.

According to the aforementioned structure, the amount of formation of the film can be increased in a central part of the electrode body and the electrical energy storage device with improved thermal stability can be achieved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a perspective view schematically illustrating an electrical energy storage device according to an embodiment;
FIG. 2 is a schematic longitudinal cross-sectional view taken along line II-II in FIG. 1;
FIG. 3 is a perspective view schematically illustrating an electrode body in FIG. 1;
FIG. 4 is a schematic view illustrating a structure of the electrode body;
FIG. 5 is a graph expressing a correlation between the amount of B element and the amount of heat generation of a negative electrode;
FIG. 6A expresses a distribution of a ratio (B/C) in a case where the permeation speed of an electrolyte solution is high, and FIG. 6B expresses a distribution of the ratio (B/C) in a case where the permeation speed of the electrolyte solution is low;
FIG. 7 is a cross-sectional view schematically illustrating a vicinity of a negative electrode active material layer; and
FIG. 8 is a cross-sectional view schematically illustrating a vicinity of a negative electrode active material layer according to a conventional art.

### DETAILED DESCRIPTION OF THE PREFERRED EMBODIMENTS

Hereinafter, preferred embodiments of the art disclosed herein will be described with reference to the drawings as appropriate. Matters that are other than matters particularly mentioned in the present specification and that are necessary for the implementation of the art disclosed herein (for example, the general configuration and manufacturing process of an electrical energy storage device that do not characterize the art disclosed herein) can be grasped as design matters of those skilled in the art based on the prior art in the relevant field. The art disclosed herein can be implemented on the basis of the disclosure of the present specification and common technical knowledge in the relevant field. Moreover, in the present specification, the notation "A to B" for a range signifies a value more than or equal to A and less than or equal to B, and is meant to encompass also the meaning of being "preferably more than A" and "preferably less than B".

### <Electrical energy storage device 100>

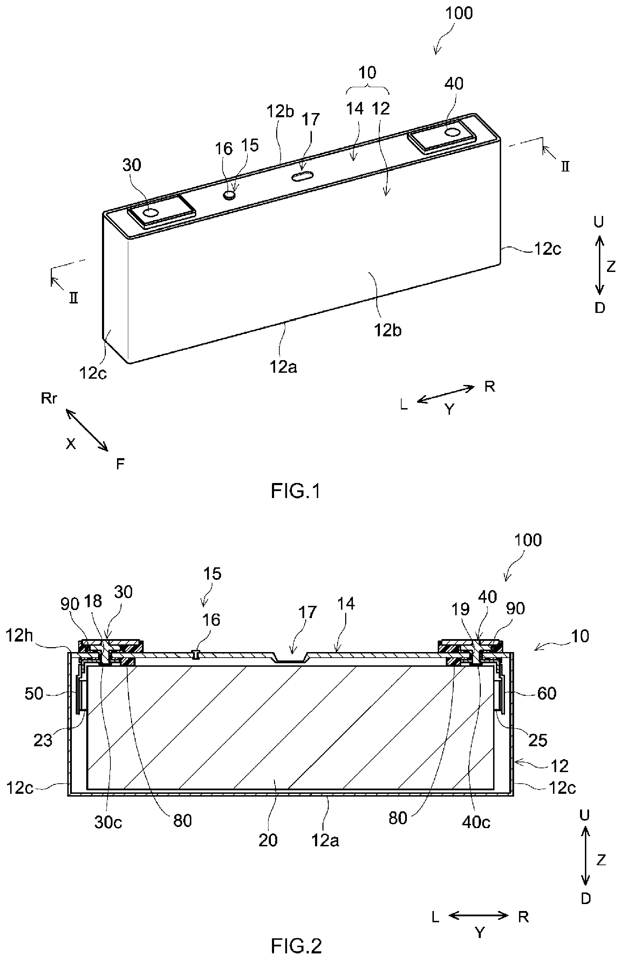

FIG. 1 is a perspective view of an electrical energy storage device 100. FIG. 2 is a schematic longitudinal cross-sectional view taken along line II-II in FIG. 1. Note that in the description below, the members and parts with the same operation are denoted by the same reference sign and the overlapping description may be omitted or simplified. In addition, reference signs F, Rr, L, R, U, and D in the drawings respectively denote front, rear, left, right, up, and down, and reference signs X, Y, and Z in the drawings respectively denote a short side direction of the electrical energy storage device 100, a long side direction that is orthogonal to the short side direction, and an up-down direction that is orthogonal to the short side direction and the long side direction. However, these are merely directions for convenience of description and do not limit the mode of installation of the electrical energy storage device 100.

As illustrated in FIG. 2, the electrical energy storage device 100 includes an electrode body 20 and an electrolyte solution (not illustrated). The electrical energy storage device 100 further includes a case 10, a positive electrode terminal 30, and a negative electrode terminal 40 here. The electrical energy storage device 100 is characterized in that the electrode body 20 includes a negative electrode 24 to be described below (specifically, a negative electrode active material layer 24a) and the other structure of the electrical energy storage device 100 may be similar to the conventional structure. The electrical energy storage device 100 is a nonaqueous electrolyte solution secondary battery here. The electrical energy storage device 100 is preferably a lithium ion secondary battery. Note that in the present specification, the term "electrical energy storage device" refers to general devices that are capable of being charged and discharged repeatedly, and corresponds to a concept encompassing secondary batteries such as lithium ion secondary batteries and nickel-hydrogen batteries and capacitors using a chemical reaction, such as lithium ion capacitors and pseudo-capacitors.

The case 10 is a housing that accommodates the electrode body 20 and the electrolyte solution. Here, as illustrated in FIG. 1, the case 10 has an outer shape having a flat and bottomed rectangular parallelepiped shape (square shape). The material of the case 10 may be the same as a material that has been used conventionally, and is not particularly limited. The case 10 is preferably formed of metal and is more preferably formed of, for example, aluminum, an aluminum alloy, iron, an iron alloy, or the like. As illustrated in FIG. 2, the case 10 includes a case main body 12 with a bottomed square shape (box shape) having an opening 12h, and a sealing plate (lid body) 14 that closes the opening 12h here. The case 10 is integrated in such a way that the sealing plate 14 is bonded (for example, bonded by welding) to a periphery of the opening 12h of the case main body 12. The case 10 is hermetically sealed.

As illustrated in FIG. 1, the case main body 12 includes a bottom surface 12a with a substantially rectangular shape having a pair of short sides and a pair of long sides, a pair of long side surfaces 12b that extend from the pair of long sides of the bottom surface 12a and face each other, and a pair of short side surfaces 12c that extend from the pair of short sides of the bottom surface 12a and face each other. The bottom surface 12a faces the opening 12h. The area of the long side surface 12b is larger than that of the short side surface 12c. Note that in the present specification, the term "substantially rectangular shape" encompasses, in addition to a perfect rectangular shape (rectangle), for example, a shape whose corner connecting a long side and a short side of the rectangular shape is rounded, a shape whose corner includes a notch, and the like.

The sealing plate 14 has a substantially rectangular shape in the plan view as illustrated in FIG. 1. The sealing plate 14 is a plate-shaped member as illustrated in FIG. 2. The sealing plate 14 faces the bottom surface 12a of the case main body 12. The sealing plate 14 includes an electrolyte solution injection hole 15, a gas discharge valve 17, and two terminal extraction holes 18 and 19. The electrolyte solution injection hole 15 is used to inject the electrolyte solution after the sealing plate 14 is assembled to the case main body 12. The electrolyte solution injection hole 15 is a penetration hole penetrating the sealing plate 14 in the up-down direction Z. The electrolyte solution injection hole 15 is sealed with a sealing member 16 after the electrolyte solution is injected. The gas discharge valve 17 is configured to fracture when pressure inside the case 10 reaches a predetermined value or more and discharge a gas in the case 10 to the outside. The terminal extraction holes 18 and 19 penetrate the sealing plate 14 in the up-down direction Z. The terminal extraction holes 18 and 19 respectively have inner diameters that enable penetration of the positive electrode terminal 30 and the negative electrode terminal 40 before the electrode terminals are attached to the sealing plate 14 (before a caulking process).

The positive electrode terminal 30 is disposed at an end part of the sealing plate 14 on one side in the long side direction Y (on a left end part in FIG. 1 and FIG. 2). As illustrated in FIG. 2, the positive electrode terminal 30 extends from the inside of the sealing plate 14 to the outside through the terminal extraction hole 18. Here, the positive electrode terminal 30 is caulked to a peripheral part of the sealing plate 14 that surrounds the terminal extraction hole 18 by caulking. A caulking part 30c is formed at an end part of the positive electrode terminal 30 on the case main body 12 side (a lower end part in FIG. 2). The positive electrode terminal 30 is preferably formed of metal and is more preferably formed of, for example, aluminum or an aluminum alloy. The positive electrode terminal 30 is insulated from the sealing plate 14 by an internal insulating member 80 and a gasket 90. The positive electrode terminal 30 is electrically connected to a positive electrode tab group 23 of the electrode body 20 through a positive electrode current collecting part 50 inside the case 10.

The negative electrode terminal 40 is disposed at an end part of the sealing plate 14 on the other side in the long side direction Y (on a right end part in FIG. 1 and FIG. 2). As illustrated in FIG. 2, the negative electrode terminal 40 extends from the inside of the sealing plate 14 to the outside through the terminal extraction hole 19. Here, the negative electrode terminal 40 is caulked to a peripheral part of the sealing plate 14 that surrounds the terminal extraction hole 19 by caulking. A caulking part 40c is formed at an end part of the negative electrode terminal 40 on the case main body 12 side (a lower end part in FIG. 2). The negative electrode terminal 40 is preferably formed of metal and is more preferably formed of copper or a copper alloy, for example. The negative electrode terminal 40 is insulated from the sealing plate 14 by the internal insulating member 80 and the gasket 90. The negative electrode terminal 40 is electrically connected to a negative electrode tab group 25 of the electrode body 20 through a negative electrode current collecting part 60 inside the case 10.

The electrode body 20 is accommodated inside the case 10. The number of electrode bodies 20 to be accommodated inside one case 10 is not limited in particular, and may be one, or two or more (plural, for example three). The electrode body 20 may be disposed inside the case 10 in a state of being covered with an electrode body holder with an insulating property. In other words, the electrode body holder may exist between the electrode body 20 and the case 10 (specifically, case main body 12).

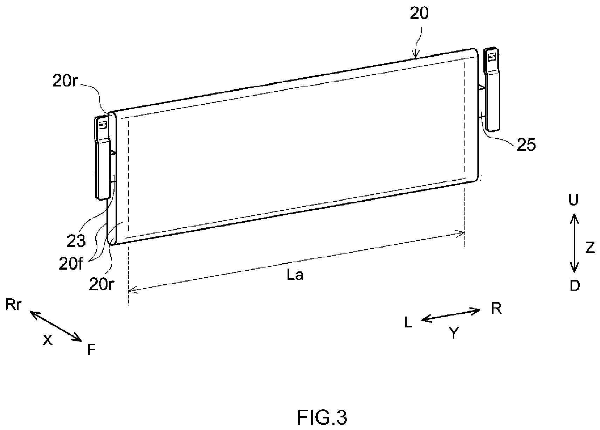

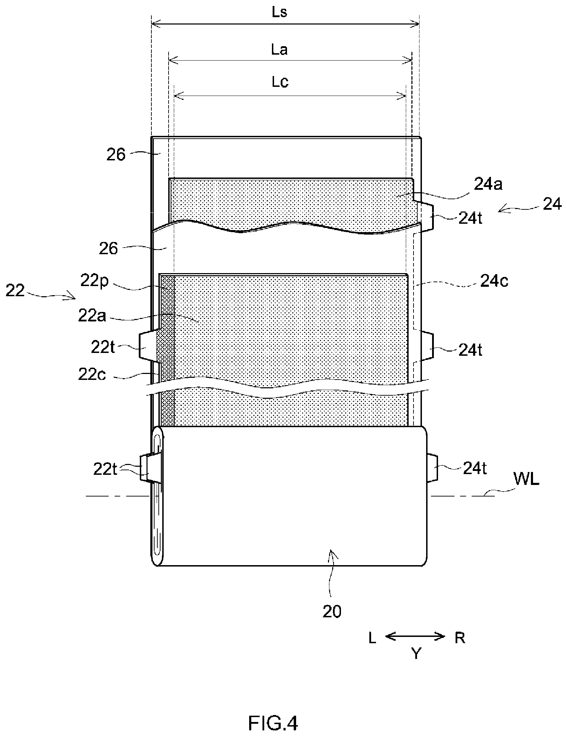

FIG. 3 is a perspective view schematically illustrating the electrode body 20. FIG. 4 is a schematic view illustrating a structure of the electrode body 20. As illustrated in FIG. 4, the electrode body 20 includes a positive electrode 22 and the negative electrode 24. The positive electrode 22 and the negative electrode 24 are insulated from each other by a separator 26 here. The electrode body 20 here is a wound electrode body. The electrode body 20 has a structure in which the positive electrode 22 with a band shape and the negative electrode 24 with a band shape are stacked in an insulated state (here, through the separator 26 with a band shape) and wound in a longitudinal direction using a winding axis WL as a center. However, in another embodiment, the electrode body 20 may be a multilayer electrode body in which a plurality of positive electrodes with a square shape (typically, a rectangular shape) and a plurality of negative electrodes with a square shape (typically, a rectangular shape) are stacked on each other in an insulated state.

The electrode body 20 is preferably the wound electrode body. When the electrode body 20 is the wound electrode body, the electrolyte solution is supplied to the negative electrode 24 only from both end parts in a winding axis WL direction. Therefore, it becomes difficult for the film formation agent in particular to reach the central part of the negative electrode 24 in the winding axis WL direction and the film is not formed easily in the central part. In other words, the amount of film tends to vary in the winding axis WL direction. Thus, it is particularly effective to apply the art disclosed herein.

Although not limited in particular, when the electrode body 20 is the wound electrode body, the number of winding turns (the number of turns) of the electrode body 20 is preferably 20 turns or more, more preferably 30 turns or more, and still more preferably 50 turns or more, and may be 150 turns or less and 100 turns or less, for example.

As illustrated in FIG. 2 and FIG. 4, the electrode body 20 here is disposed inside the case 10 in a direction in which the winding axis WL is substantially parallel to the long side direction Y. The winding axis WL direction is a width direction of the electrode body 20 and coincides with the long side direction Y here. The electrode body 20 is disposed inside the case 10 in a direction in which the winding axis WL is substantially parallel to the bottom surface 12a and substantially orthogonal to the long side surface 12b and the short side surface 12c. In another embodiment, however, the electrode body 20 may be disposed inside the case 10 in a direction in which the winding axis WL is substantially parallel to the up-down direction Z.

As illustrated in FIG. 3, the external shape of the electrode body 20 is a flat shape. The external shape of the electrode body 20 is preferably a flat shape. The electrode body 20 includes a pair of flat parts 20f and a pair of curved parts (R parts) 20r coupling the pair of flat parts 20f. The flat part 20f includes a flat outer surface (YZ plane in FIG. 3). The curved part 20r includes a curved outer surface. Note that in the present specification, "flat outer surface" is not limited to a perfectly flat surface, and is a term that encompasses a case in which a small step, curve, concave part, convex part, or the like is included when viewed microscopically, for example.

The positive electrode 22 may be similar to the conventional positive electrode, without particular limitations. As illustrated in FIG. 4, the positive electrode 22 includes a positive electrode current collector 22c, and a positive electrode active material layer 22a and a positive electrode protection layer 22p that are fixed on at least one surface of the positive electrode current collector 22c. However, the positive electrode protection layer 22p is not essential, and can be omitted in another embodiment. The positive electrode current collector 22c has a band shape here. The positive electrode current collector 22c is formed of, for example, a conductive metal such as aluminum, an aluminum alloy, nickel, or stainless steel. Here, the positive electrode current collector 22c is a metal foil, specifically an aluminum foil.

At one end part (left end part in FIG. 4) of the positive electrode current collector 22c in the long side direction Y (width direction, winding axis WL direction), a plurality of positive electrode tabs 22t are provided. The positive electrode tab 22t constitutes a part of the positive electrode current collector 22c here, and is made of a metal foil (aluminum foil). The positive electrode tabs 22t are provided with a space (intermittently) along a longitudinal direction of the positive electrode 22. Each of the plurality of positive electrode tabs 22t has a convex shape and protrudes to one side (left side in FIG. 4) in the long side direction Y. The plurality of positive electrode tabs 22t extend in the long side direction Y relative to the separator 26. The plurality of positive electrode tabs 22t are stacked at one end part in the long side direction Y (left end part), and form the positive electrode tab group 23. As illustrated in FIG. 2, the positive electrode tab group 23 is electrically connected to the positive electrode terminal 30 through the positive electrode current collecting part 50 here.

As illustrated in FIG. 4, the positive electrode active material layer 22a is provided to have a band shape along a longitudinal direction of the positive electrode current collector 22c with a band shape. The positive electrode active material layer 22a contains a positive electrode active material (for example, a lithium transition metal complex oxide such as a lithium nickel cobalt manganese containing complex oxide) capable of reversibly storing and releasing the charge carriers. The positive electrode active material layer 22a may contain any component other than the positive electrode active material, for example, a conductive material, a binder, various additive components, or the like. As the conductive material, for example, a carbon material such as acetylene black (AB) can be used. As the binder, for example, polyvinylidene fluoride (PVdF) or the like can be used.

Although not limited in particular, in the electrical energy storage device 100 of a high-capacity type, which is used for vehicles or the like, as illustrated in FIG. 4, a length Lc (average value, excluding a part formed in the positive electrode tab 22t) of the positive electrode active material layer 22a in the long side direction Y (width direction, winding axis WL direction) is preferably 150 mm or more, more preferably 200 mm or more, and still more preferably 250 mm or more. The length Lc is preferably less than or equal to a length La of the negative electrode active material layer 24a in the long side direction Y to be described below.

The positive electrode protection layer 22p is provided between the positive electrode current collector 22c and the positive electrode active material layer 22a in the long side direction Y as illustrated in FIG. 4. Here, the positive electrode protection layer 22p is provided at one end part (left end part in FIG. 4) of the positive electrode current collector 22c in the long side direction Y. The positive electrode protection layer 22p is formed to have a band shape along the positive electrode active material layer 22a. The positive electrode protection layer 22p contains inorganic filler (for example, alumina). The positive electrode protection layer 22p may contain an optional component other than the inorganic filler, such as a conductive material, a binder, or various additive components. The conductive material and the binder may be the same as those described as the examples that may be contained in the positive electrode active material layer 22a.

As illustrated in FIG. 4, the negative electrode 24 includes a negative electrode current collector 24c and the negative electrode active material layer 24a that is fixed on at least one surface of the negative electrode current collector 24c. The negative electrode current collector 24c has a band shape here. The negative electrode current collector 24c is formed of, for example, a conductive metal such as copper, a copper alloy, nickel, or stainless steel. The negative electrode current collector 24c preferably includes copper or a copper alloy. Here, the negative electrode current collector 24c is a metal foil, specifically a copper foil.

At the other end part (right end part in FIG. 4) of the negative electrode current collector 24c in the long side direction Y (width direction, winding axis WL direction), a plurality of negative electrode tabs 24t are provided. The negative electrode tab 24t here constitutes a part of the negative electrode current collector 24c and is made of a metal foil (copper foil). The plurality of negative electrode tabs 24t are provided with a space (intermittently) along a longitudinal direction of the negative electrode 24. Each of the plurality of negative electrode tabs 24t has a convex shape and protrudes to the other side (right side in FIG. 4) in the long side direction Y. The plurality of negative electrode tabs 24t protrude in the long side direction Y relative to the separator 26. The plurality of negative electrode tabs 24t are stacked at the other end part in the long side direction Y (right end part) and form the negative electrode tab group 25. As illustrated in FIG. 2, the negative electrode tab group 25 is electrically connected to the negative electrode terminal 40 through the negative electrode current collecting part 60 here.

As illustrated in FIG. 4, the negative electrode active material layer 24a is provided to have a band shape along the longitudinal direction of the negative electrode current collector 24c with a band shape. The negative electrode active material layer 24a contains a negative electrode active material (for example, a carbon material such as graphite, or a silicon containing material) capable of reversibly storing and releasing the charge carriers. When a total solid content of the negative electrode active material layer 24a is set to 100 mass%, the negative electrode active material may occupy approximately 80 mass% or more, typically 90 mass% or more, and for example 95 mass% or more.

The negative electrode active material layer 24a may contain any component other than the negative electrode active material, for example, a binder, a thickener, various additive components, or the like. As the binder, for example, rubbers such as styrenebutadiene rubber (SBR) and its modified body, or acrylonitrile butadiene rubber and its modified body can be used. As the thickener, for example, celluloses such as carboxymethyl cellulose (CMC) and methyl cellulose (MC) can be used. In the case of using the binder, the ratio of the binder in the negative electrode active material layer 24a is preferably 0.1 to 10 mass% and more preferably 0.2 to 5 mass%. In the case of using the thickener, the ratio of the thickener in the negative electrode active material layer 24a is preferably 0.1 to 10 mass% and more preferably 0.2 to 5 mass%.

As illustrated in FIG. 4, the length La (average value, excluding a part formed in the negative electrode tab 24t) of the negative electrode active material layer 24a in the long side direction Y (width direction, winding axis WL direction) is typically more than or equal to the length Lc of the positive electrode active material layer 22a in the long side direction Y. Although not limited in particular, the length La of the negative electrode active material layer 24a is preferably 200 mm or more, and more preferably 250 mm or more from the viewpoints of increasing the capacity, and the like. Thus, in the electrode body 20, as the length La is longer, the film formation agent reaches less easily into the central part of the negative electrode active material layer 24a in the long side direction Y. As a result, the film is not formed easily in the central part and the amount of film tends to vary in the long side direction Y. Thus, it is particularly effective to apply the art disclosed herein. The length La may be, for example, 1000 mm or less and 500 mm or less. Thus, the effect of the art disclosed herein can be achieved at a high level.

The negative electrode active material layer 24a in this embodiment typically includes a film (SEI film) containing a boron (B) element. Boron in the film is a component derived from a compound containing the boron element (B element containing compound), which is added to the electrolyte solution when the electrical energy storage device 100 is constructed, for example the film formation agent to be described below. In other words, the film is, for example, a decomposition product including the B element containing compound that is decomposed at the initial charging. Since the film containing boron has excellent stability, the durability and the thermal stability of the electrical energy storage device 100 can be improved suitably.

As illustrated in FIG. 4, the separator 26 is a member that insulates the positive electrode active material layer 22a of the positive electrode 22 and the negative electrode active material layer 24a of the negative electrode 24 from each other. A length Ls of the separator 26 in the long side direction Y (width direction, winding axis WL direction) is typically more than or equal to the length La of the negative electrode active material layer 24a in the long side direction Y. The separator 26 is preferably, for example, a porous sheet made of resin including polyolefin resin such as polyethylene (PE) or polypropylene (PP). The separator 26 may include a functional layer such as an adhesive layer or a heat resistance layer (HRL) on a surface of a base material part formed by a porous sheet made of resin. The adhesive layer is a layer including a binder. For example, the heat resistance layer is a layer including inorganic filler such as alumina, silica, boehmite, magnesia, or titania and a binder such as PVdF. The heat resistance layer can also serve as the adhesive layer. The structures of the heat resistance layer and the adhesive layer may be similar to the conventional structures thereof.

The electrolyte solution is typically a nonaqueous electrolyte solution containing a nonaqueous solvent and an electrolyte salt (supporting salt). As the nonaqueous solvent, one kind or two or more kinds of nonaqueous solvents that have conventionally been known as being usable for this type of application can be used. Examples of the nonaqueous solvent include organic solvents such as carbonates, ethers, esters, nitriles, sulfones, and lactones. Examples of the carbonates include chain carbonates such as dimethyl carbonate (DMC), diethyl carbonate (DEC), and ethyl methyl carbonate (EMC) and cyclic carbonates such as ethylene carbonate (EC) and propylene carbonate (PC). The nonaqueous solvent preferably includes the carbonates. In particular, the nonaqueous solvent preferably contains a cyclic carbonate and a chained carbonate.

The electrolyte salt is not limited to a particular type as long as the charge carriers (typically, lithium ion) are included, and one kind or two or more kinds of electrolyte salts that have conventionally been known as being usable for this type of application can be used. One example of the electrolyte salt is fluorine-containing lithium salt such as LiPF₆ or LiBF₄. The electrolyte salt preferably contains LiPF₆.

The electrolyte solution may further contain an additional component (additive). As the additive, one kind or two or more kinds of additives that have conventionally been known as being able to be added to the electrolyte solution can be used. Examples of the additive include: a boron-based additive containing a boron element, such as lithium bisoxalate borate (LiBOB) or lithium difluoro(oxalato)borate (LiODFB); a phosphorus-based additive containing a phosphorus element, such as lithium difluorophosphate (LiPO₂F₂) or lithium difluorooxalate phosphate (LiDFOP); and the like. These additives may be so-called film formation agents that are decomposed before (at lower potential than) the nonaqueous solvent and/or the electrolyte salt at the initial charging and deposited as a film on the surface of the negative electrode active material layer 24a.

The electrolyte solution preferably includes a compound containing the boron (B) element (B element containing compound), such as a lithium salt containing the boron element (B element containing lithium salt). Examples of the B element containing compound (for example, B element containing lithium salt) include an oxalato complex compound containing the boron element (B element containing oxalato compound), such as LiBF₄ given above as the example of the supporting salt or LiBOB and LiODFB given above as the example of the boron-based additive. In particular, it is preferable to include the oxalato complex compound containing the boron element (B element containing oxalato compound), and more preferable to include LiBOB.

Although there is no particular limitation, for example, the concentration of the B element containing compound (preferably, the B element containing oxalato compound, such as LiBOB) in the electrolyte solution before the initial charging is preferably 0.01 mol/L or more, more preferably 0.02 mol/L or more, and still more preferably 0.05 mol/L or more because a suitable amount of film can be easily formed on the negative electrode active material layer 24a. From the viewpoint of suppressing the increase in battery resistance or the like, the concentration of the B element containing compound (preferably, the B element containing oxalato compound, such as LiBOB) in the electrolyte solution is preferably 2 mol/L or less, more preferably 1.5 mol/L or less, and still more preferably 1 mol/L or less.

Note that the additive (for example, the film formation agent described above) added in the nonaqueous electrolyte solution when the electrical energy storage device 100 is manufactured is decomposed electrically by the initial charging or the like and consumed to form the film on the negative electrode active material layer 24a or the like. Therefore, in the state of the electrical energy storage device 100, the additive as described above may be included (partially remain) or may not be included in the electrolyte solution.

### <Negative electrode active material layer 24a>

Incidentally, the negative electrode active material layer 24a in this embodiment contains a sodium (Na) element due to, for example, the binder or the thickener used at the manufacture of the negative electrode 24. For example, SBR given as the example of the binder can be a sodium salt (SBR-Na) containing the sodium element as the impurity, and in one example, the content of the sodium element per unit mass can be about 5.0 × 10³ ppm as also described in Japanese Patent Application Publication No. 2023-43975. In addition, CMC given as the example of the thickener can be a sodium salt (CMC-Na) containing the sodium element as the impurity and in one example, the content of the sodium element per unit mass can be about 1.0 × 10⁵ ppm as also described in Japanese Patent Application Publication No. 2023-43975. The sodium element can react with the film formation agent in the electrolyte solution and be deposited on the negative electrode active material layer 24a as a part of the film.

According to the present inventors' examination, in the negative electrode active material layer 24a, the film formation agent is trapped by the sodium element little by little and deposited as a part of the film in a process in which the electrolyte solution permeates into the central part of the electrode body 20 in the long side direction Y (width direction). As a result, the amount of the film formation agent that reaches the central part of the electrode body 20 decreases. Thus, the amount of the formation of the film becomes smaller in the central part than in the end part of the electrode body 20 and the thermal stability tends to decrease.

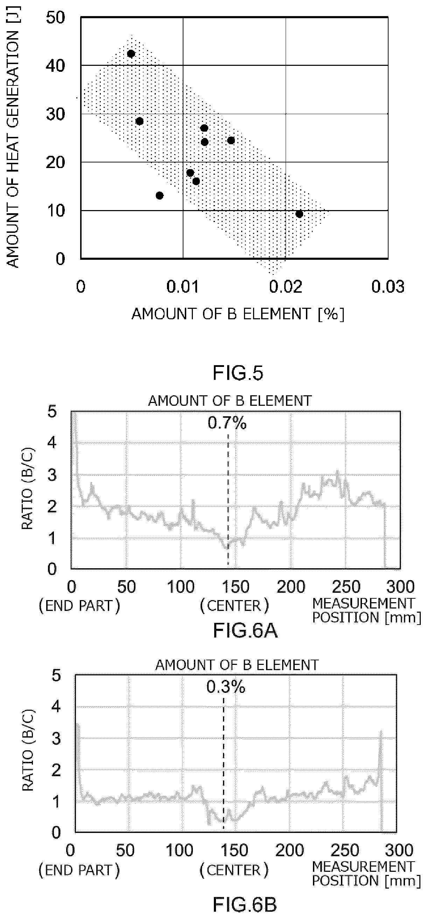

FIG. 5 is a graph expressing a correlation between the amount of heat generation of the negative electrode and the amount of the boron (B) element in the central part of the negative electrode active material layer 24a in the long side direction Y. Here, a plurality of parts with the different B element amounts are cut from the negative electrode active material layer 24a and the amount of heat generation in each part is measured. Note that the amount of the B element is a value used as an index of the amount of the formation of the film and is the ratio (the mass of the B element/the mass of the negative electrode active material, %) of the mass of boron to the mass of the negative electrode active material, which is measured by laser ablation inductively coupled plasma mass spectrometry (LA-ICP-MS). The amount of heat generation of the negative electrode is obtained in such a way that a negative electrode mixture peeled from the negative electrode active material layer 24a and the electrolyte solution are accommodated in a sample container, this sample container is closed by pressing and then set to a differential scanning calorimetry (DSC) together with a reference material (Al₂O₃, 2 mg), the temperature is increased from 25°C to 350°C in an inert atmosphere, and the amount of heat generation (J) is obtained from an integrated value between 100 to 200°C.

As expressed in FIG. 5, there is a negative correlation between the amount of heat generation of the negative electrode and the amount of the B element (the amount of the formation of the film) in the central part of the negative electrode active material layer 24a in the long side direction Y. Therefore, the present inventors considered to suppress the amount of heat generation by increasing the amount of the B element (the amount of the formation of the film) in the central part of the negative electrode active material layer 24a in the long side direction Y. One way to increase the amount of the B element (the amount of the formation of the film) is to make the entire negative electrode active material layer 24a free of sodium by using only a sodium-free material for the negative electrode active material layer 24a; however, since the sodium-free material is still expensive and difficult to obtain, it is hard to make the negative electrode active material layer 24a completely free of sodium from the viewpoints of the cost, the productivity, and the like.

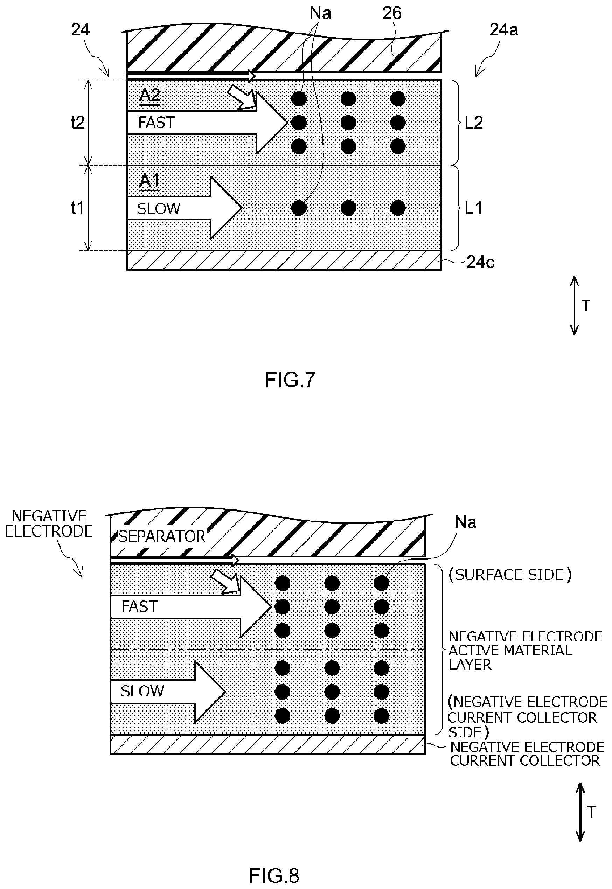

As a result of the present inventors' examinations, it has been clarified that there is a difference in permeation speed of the electrolyte solution in a thickness direction in the negative electrode active material layer 24a and accordingly, the amount of the B element (the amount of the formation of the film) varies in the thickness direction. That is to say, as illustrated in FIG. 8 (conventional art), when the electrolyte solution permeates into the negative electrode active material layer in the conventional negative electrode, the electrolyte solution permeates not just from an end part (edge part) side as indicated by arrows but also through a gap with the separator on a surface side of the negative electrode active material layer. Therefore, the permeation of the electrolyte solution tends to become fast relatively. On the other hand, on a negative electrode current collector side of the negative electrode active material layer, the electrolyte solution permeates only from an end part side as indicted by the arrow; therefore, the permeation of the electrolyte solution tends to become slow relatively.

FIG. 6A and FIG. 6B express distributions of a ratio (B/C) in cases where the permeation speed of the electrolyte solution is different. FIG. 6A expresses the case where the permeation time of the electrolyte solution is relatively short (specifically, it takes 10 hours for the electrolyte solution to reach the center of the negative electrode active material layer 24a in the long side direction Y), and FIG. 6B expresses the case where the permeation time of the electrolyte solution is relatively long (specifically, it takes 30 hours for the electrolyte solution to reach the center of the negative electrode active material layer 24a in the long side direction Y). Note that the permeation time of the electrolyte solution is adjusted by a process of promoting the permeation (specifically, the degree of decompression) here. The ratio (B/C) shown along a vertical axis of the graph is obtained in such a way that the amount of a carbon (C) element derived from the negative electrode active material and the amount of the boron (B) element derived from the film formation agent are measured along the long side direction Y (width direction) of the negative electrode active material layer 24a in accordance with LA-ICP-MS, and the amount of the B element (the amount of the formation of the film) is expressed as the ratio (B/C) of the amount of the boron element (strength) to the amount of the carbon element (strength). As for the center in the long side direction Y (width direction), the value of the amount of the B element (%, the unit is the same as that in FIG. 5) by LA-ICP-MS is also shown.

The comparison between FIG. 6A and FIG. 6B indicates that when the permeation speed of the electrolyte solution is slow, the amount of the B element (the amount of the formation of the film) becomes relatively small in the central part of the negative electrode active material layer 24a in the long side direction Y (width direction). Although the limited interpretation is not intended in particular, the present inventors considered the reason as follows: the slow permeation speed increases the amount of free sodium element and accordingly, the amount of the B element to be trapped by the sodium element increases.

In the art disclosed herein made based on the aforementioned examination, as illustrated in FIG. 7, when the negative electrode active material layer 24a is divided into two virtually in a thickness direction T, in which a region that is relatively close to the negative electrode current collector 24c is a lower layer region A1 and a region that is relatively far from the negative electrode current collector 24c is an upper layer region A2, a content C1 of the sodium element in the lower layer region A1 is made lower than a content C2 of the sodium element in the upper layer region A2 (C1 < C2). By making the amount of sodium relatively small in the lower layer region A1 where the permeation speed is relatively slow in this manner, the B element can easily reach the central part in the long side direction Y (width direction). As a result, the amount of the film to be formed in the thickness direction can be homogenized and the amount of the formation of the film can be increased in the central part of the negative electrode active material layer 24a in the long side direction Y (width direction) without the necessity of making the negative electrode active material layer 24a completely free of sodium. Furthermore, the thermal stability of the electrical energy storage device 100 can be improved and the temperature increase of the electrical energy storage device 100 at the overcharging or the like can be suppressed.

Note that the content of the sodium element in each region (the content may be a content ratio (%)) can be evaluated by a conventional method in accordance with LA-ICP-MS as described above.

The lower layer region A1 may or may not contain the sodium element. That is to say, the content C1 of the sodium element in the lower layer region A1 may be either zero or more than zero. When the lower layer region A1 contains the sodium element, the ratio (C2/C1) of the content C2 of the sodium element in the upper layer region A2 to the content C1 of the sodium element in the lower layer region A1 is more than 1. From the viewpoint of achieving the effect of the art disclosed herein at the higher level, the ratio (C2/C1) is preferably 1.5 or more, more preferably 2 or more, and in one example, 5 or more and still more preferably 10 or more. Although there is no particular limitation, the content C1 is preferably less than 0.06 mass%, more preferably less than 0.05 mass%, and in one example, still more preferably less than 0.02 mass%. The content C2 is preferably 0.06 mass% or more, and more preferably 0.07 mass% or more (for example, 0.07 to 0.1 mass%). A difference (C2 - C1) between the content C1 and the content C2 is preferably 0.01 mass% or more, more preferably 0.02 mass% or more, and in one example, 0.04 mass% or more, and still more preferably 0.05 mass% or more. Thus, the effect of the art disclosed herein can be achieved at the higher level.

In the embodiment in FIG. 7, the negative electrode active material layer 24a has a two-layer structure. Specifically, the negative electrode active material layer 24a includes a negative electrode lower layer L1 that is relatively close to the negative electrode current collector 24c and a negative electrode upper layer L2 that is relatively far from the negative electrode current collector 24c. The negative electrode upper layer L2 exists on the surface side (side closer to the separator 26) relative to the negative electrode lower layer L1, and here forms the outermost layer of the negative electrode active material layer 24a. That is to say, the negative electrode upper layer L2 is in contact with the separator 26. In the negative electrode active material layer 24a, the content of the sodium element is clearly different with an interface between the negative electrode lower layer L1 and the negative electrode upper layer L2 serving as a border. Specifically, the content of the sodium element in the negative electrode lower layer L1 is lower than that in the negative electrode upper layer L2. In another embodiment, however, the negative electrode active material layer 24a may be formed so that the content of the sodium element decreases gradually (in gradation) from the surface side (side closer to the separator 26) toward the negative electrode current collector 24c.

In this embodiment, a thickness t1 of the negative electrode lower layer L1 and a thickness t2 of the negative electrode upper layer L2 are substantially the same; however, in another embodiment, the thickness t1 of the negative electrode lower layer L1 and the thickness t2 of the negative electrode upper layer L2 may be different. In some embodiments, the thickness t1 of the negative electrode lower layer L1 is preferably 1/2 or more and more preferably 2/3 or more of the entire thickness of the negative electrode active material layer 24a from the viewpoint of achieving the effect of the art disclosed herein at the higher level. In some other embodiments, the thickness t1 of the negative electrode lower layer L1 and the thickness t2 of the negative electrode upper layer L2 preferably satisfy a relation 0.8 ≤ t1/t2 ≤ 1.2.

Although there is no particular limitation, the thickness of the negative electrode active material layer 24a per surface (average thickness) may be generally 20 µm or more, for example 40 µm or more, or 50 µm or more and may be generally 300 µm or less, for example 200 µm or less, or 150 µm or less.

The negative electrode active material layer 24a with the two-layer structure as illustrated in FIG. 7 can be manufactured in such a way that the negative electrode lower layer L1 and the negative electrode upper layer L2 are formed of different kinds of materials (typically, binder and/or thickener) or the mixing ratio of these materials are made different.

### <Manufacturing method for negative electrode 24>

The negative electrode 24 for the electrical energy storage device 100 disclosed herein can be manufactured by a manufacturing method including, for example, a first preparing step (step 1A) of preparing a first paste, a second preparing step (step 1B) of preparing a second paste, a first forming step (step 2) of forming the negative electrode lower layer L1, and a second forming step (step 3) of forming the negative electrode upper layer L2. Note that the order of the first preparing step (step 1A) and the second preparing step (step 1B) is not limited in particular. In addition, the order of the second preparing step (step 1B) and the first forming step (step 2) is not limited in particular. Moreover, another step may be included at an optional stage.

The first preparing step (step 1A) is a step of preparing the first paste for forming the negative electrode lower layer L1. Specifically, the first preparing step (step 1A) is a step of preparing the first paste including a negative electrode active material and a lithium salt of carboxymethyl cellulose (CMC-Li). The first paste is obtained in such a way that at least the negative electrode active material (for example, a carbon material such as graphite) and CMC-Li are prepared as a solid content material forming the negative electrode lower layer L1 and for example, are mixed with a predetermined solvent in the mixing ratio as described above. Examples of the solvent include an aqueous solvent including water and a nonaqueous solvent such as N-methyl-2-pyrrolidone. The first paste may further include the binder as described above. In this specification, the term "paste" refers to a mixture in which the solid content is dispersed in the solvent partially or entirely, and encompasses slurry, ink, and the like.

The first paste may include a sodium salt (for example, CMC-Na and/or SBR-Na) but preferably does not include the sodium salt. Note that CMC-Li can contain sodium slightly but in one example, the content of the sodium element per unit mass is about 2.0 × 10³ ppm, which is a very small amount compared to that in CMC-Na (in one example, the content of the sodium element per unit mass is about 1.0 × 10⁵ ppm) as also described in Japanese Patent Application Publication No. 2023-43975.

The second preparing step (step 1B) is a step of preparing the second paste for forming the negative electrode upper layer L2. Specifically, the second preparing step (step 1B) is a step of preparing the second paste including a negative electrode active material and the sodium salt of carboxymethyl cellulose (CMC-Na). The second paste is obtained in such a way that at least the negative electrode active material (for example, a carbon material such as graphite) and CMC-Na are prepared as a solid content material forming the negative electrode upper layer L2 and for example, are mixed with a predetermined solvent in the mixing ratio as described above. The kind of the negative electrode active material may be either the same as or different from that of the first paste. The second paste may further include the binder as described above. The second paste preferably does not include the lithium salt (for example, CMC-Li and/or SBR-Li). The mixing ratio of CMC-Na is preferably the same as that of CMC-Li in the first paste. In some embodiments, the second paste preferably has the same structure as that of the first paste except that CMC-Li in the first paste is changed to CMC-Na.

The first forming step (step 2) is a step of forming the negative electrode lower layer L1 by applying the first paste prepared in the first preparing step on the negative electrode current collector 24c. The first paste can be applied using, for example, a conventionally known applying device such as a gravure coater, a coma coater, a slit coater, or a die coater. The applied first paste may be dried or compressed by pressing in accordance with a conventional method. Thus, the negative electrode lower layer L1 with the relatively low content of the sodium element can be formed.

The second forming step (step 3) is a step of forming the negative electrode upper layer L2 by applying the second paste prepared in the second preparing step on the negative electrode lower layer L1 formed in the first forming step. The second paste can be applied in a manner similar to the application of the first paste. Thus, the negative electrode upper layer L2 with the relatively high content of the sodium element can be formed. In one example of the art disclosed herein, CMC-Li is contained in the first paste for forming the negative electrode lower layer L1 and instead of CMC-Li, the same amount of CMC-Na is used for the second paste for forming the negative electrode upper layer L2. In this case, the content of the sodium element in the negative electrode lower layer L1 can be 0.014 mass% and the content of the sodium element in the negative electrode upper layer L2 can be 0.072 mass%, and the aforementioned ratio (C2/C1) can be calculated as 5.35. As described above, the negative electrode 24 with the two-layer structure disclosed herein can be manufactured.

### <Manufacturing method for electrical energy storage device 100>

The electrical energy storage device 100 can be manufactured by a manufacturing method including a manufacturing step of manufacturing the electrode body 20 using the negative electrode 24 manufactured by the aforementioned manufacturing method. The electrical energy storage device 100 can be manufactured by a manufacturing method including, for example, a manufacturing step (step 10) of manufacturing the electrode body 20 using the negative electrode 24, a constructing step (step 20) of constructing a battery assembly by accommodating the manufactured electrode body 20 in the case 10, and an activating step (step 30) of activating the battery assembly in this order. Moreover, another step may be included at an optional stage.

In the manufacturing step (step 10), the positive electrode 22 and the separator 26 are prepared separately and the negative electrode 24 manufactured by the aforementioned manufacturing method is disposed to face the positive electrode 22 through the separator 26 and wound, for example. Thus, the electrode body 20 is manufactured.

In the constructing step (step 20), the electrode body 20 manufactured in the manufacturing step and the electrolyte solution prepared separately are accommodated in the case 10. In a preferred embodiment, first, the positive electrode tab group 23 of the electrode body 20 is bonded to the positive electrode current collecting part 50 and the negative electrode tab group 25 of the electrode body 20 is bonded to the negative electrode current collecting part 60. Thus, the sealing plate 14 and the electrode body 20 are integrated. Next, the opening 12h of the case main body 12 is covered with the sealing plate 14 and the electrode body 20 is accommodated inside the case main body 12. Subsequently, the sealing plate 14 is welded to a periphery of the opening 12h of the case main body 12, so that the case main body 12 and the sealing plate 14 are integrated. Then, the electrolyte solution is prepared and injected into the case 10 through the electrolyte solution injection hole 15 of the sealing plate 14. The electrolyte solution includes the B element containing compound necessarily and more preferably includes the B element containing oxalato compound such as LiBOB. Thus, the battery assembly is constructed.

In the activating step (step 30), the battery assembly constructed in the constructing step is charged at least once. The constructed battery assembly is preferably charged and discharged at least once. The battery assembly can be charged and discharged as in the conventional method. Typically, an external power source is connected between the positive electrode terminal 30 and the negative electrode terminal 40 and charging or discharging is performed until a predetermined charging state (state of charge, SOC) is obtained between the terminals. The battery assembly is preferably charged at least until a decomposing potential of the B element containing compound included in the electrolyte solution. Thus, the film (SEI film) containing the boron (B) element is formed on the negative electrode active material layer 24a. Then, the electrolyte solution injection hole 15 is sealed with the sealing member 16 and the case 10 is closed. Thus, the electrical energy storage device 100 can be manufactured.

### <Application of electrical energy storage device 100>

The electrical energy storage device 100 can be used in various applications, and for example, suitably used as a motive power source (electrical power source for driving) for a motor mounted on a vehicle such as a passenger car or a truck because the thermal stability is excellent. Although the type of vehicles is not particularly limited, examples thereof may include a plug-in hybrid electric vehicle (PHEV), a hybrid electric vehicle (HEV), a battery electric vehicle (BEV), and the like.

Although the preferable embodiments of the present disclosure have been described above, they are merely examples. The present disclosure can be implemented in various other modes. The present disclosure can be implemented based on the contents disclosed in the present specification and the technical common sense in the relevant field. The techniques described in the scope of claims include those in which the embodiments exemplified above are variously modified and changed. For example, another modification can replace a part of the aforementioned embodiment or be added to the aforementioned embodiment. Additionally, the technical feature may be deleted as appropriate unless such a feature is described as an essential element.

In the manufacturing method described above, the amount of sodium is varied in the negative electrode lower layer L1 and the negative electrode upper layer L2 mainly by the kind of thickener. Specifically, the amount of sodium is varied in the negative electrode lower layer L1 and the negative electrode upper layer L2 by using CMC-Li (lithium salt) in the first paste for forming the negative electrode lower layer in the first preparing step and CMC-Na (sodium salt) in the second paste for forming the negative electrode upper layer in the second preparing step. However, the present disclosure is not limited to this process.
(1) For example, in the first preparing step (step 1A), pure CMC, a potassium salt of CMC (CMC-K), or the like may be used instead of CMC-Li (lithium salt).
(2) For example, the amount of sodium in the negative electrode lower layer L1 and the negative electrode upper layer L2 may be varied by the kind of binder. For example, the amount of sodium may be varied in the negative electrode lower layer L1 and the negative electrode upper layer L2 by using a lithium salt of SBR (SBR-Li) as the binder in the first paste for forming the negative electrode lower layer in the first preparing step and a sodium salt of SBR (SBR-Na) as the binder in the second paste for forming the negative electrode upper layer in the second preparing step. In this case, the first paste preferably does not include the sodium salt (CMC-Na, SBR-Na, or the like). Note that, in one example, the content of the sodium element per unit mass is about 2.0 × 10³ ppm, which is a small amount compared to that in SBR-Na (in one example, the content of the sodium element per unit mass is about 5.0 × 10³ ppm) as also described in Japanese Patent Application Publication No. 2023-43975.
(3) For example, the amount of sodium in the negative electrode lower layer L1 and the negative electrode upper layer L2 may be varied by the content of the sodium salt (for example, CMC-Na and/or SBR-Na). Specifically, the mixing ratio of the sodium salt in the second paste may be made relatively larger than that in the first paste. In one example of the art disclosed herein, the lithium salt is not used, and the sodium salt (for example, CMC-Na) is contained in the first paste for forming the negative electrode lower layer L1 and the second paste for forming the negative electrode upper layer L2. At this time, CMC-Na is contained in the first paste so that the sodium element is contained by 0.046% and CMC-Na is contained in the second paste so that the sodium element is contained by 0.072%; in this case, the aforementioned ratio (C2/C1) can be calculated as 1.57.

As described above, the following items are given as specific aspects of the art disclosed herein.
Item 1: The electrical energy storage device including: the electrode body including the positive electrode and the negative electrode; and the electrolyte solution, in which the negative electrode includes the negative electrode current collector, and the negative electrode active material layer fixed on the negative electrode current collector, the negative electrode active material layer contains the sodium element, and when the negative electrode active material layer is divided into two virtually in the thickness direction, in which the region that is relatively close to the negative electrode current collector is the lower layer region and the region that is relatively far from the negative electrode current collector is the upper layer region, the content of the sodium element in the lower layer region is lower than the content of the sodium element in the upper layer region.
Item 2: The electrical energy storage device according to Item 1, in which the electrolyte solution includes the oxalato complex compound containing the boron element.
Item 3: The electrical energy storage device according to Item 1 or 2, in which the electrolyte solution includes lithium bisoxalate borate (LiBOB).
Item 4: The electrical energy storage device according to any one of Items 1 to 3, in which the electrode body is the wound electrode body in which the positive electrode with a band shape and the negative electrode with a band shape are stacked and wound in the insulated state.
Item 5: The electrical energy storage device according to Item 4, in which the negative electrode active material layer has a length of 200 mm or more in the winding axis direction.
Item 6: The electrical energy storage device according to any one of Items 1 to 5, in which the ratio (C2/C1) of the content C2 of the sodium element in the upper layer region to the content C1 of the sodium element in the lower layer region is 1.5 or more.
Item 7: The manufacturing method for the negative electrode for the electrical energy storage device, including: the first preparing step of preparing the first paste including a negative electrode active material and the lithium salt of carboxymethyl cellulose (CMC-Li); the second preparing step of preparing the second paste including a negative electrode active material and the sodium salt of carboxymethyl cellulose (CMC-Na); the first forming step of forming the negative electrode lower layer by applying the first paste on the negative electrode current collector; and the second forming step of forming the negative electrode upper layer by applying the second paste on the negative electrode lower layer.
Item 8: The manufacturing method for the electrical energy storage device, including the manufacturing step of manufacturing the electrode body using the negative electrode manufactured by the manufacturing method according to Item 7.

### [Reference Signs List]

10 Case
20 Electrode body
24 Negative electrode
24a Negative electrode active material layer
A1 Lower layer region
A2 Upper layer region
L1 Negative electrode lower layer
L2 Negative electrode upper layer
26 Separator
100 Electrical energy storage device

## Claims

1. An electrical energy storage device (100) comprising:
an electrode body (20) including a positive electrode (22) and a negative electrode (24); and
an electrolyte solution, wherein
the negative electrode (24) includes a negative electrode current collector (24c), and a negative electrode active material layer (24a) fixed on the negative electrode current collector (24c),
the negative electrode active material layer (24a) contains a sodium element, and
when the negative electrode active material layer (24a) is divided into two virtually in a thickness direction (T), in which a region that is relatively close to the negative electrode current collector (24c) is a lower layer region (A1) and a region that is relatively far from the negative electrode current collector (24c) is an upper layer region (A2), a content of the sodium element in the lower layer region (A1) is lower than a content of the sodium element in the upper layer region (A2).

2. The electrical energy storage device (100) according to claim 1, wherein the electrolyte solution includes an oxalato complex compound containing a boron element.

3. The electrical energy storage device (100) according to claim 1, wherein the electrolyte solution includes lithium bisoxalate borate (LiBOB).

4. The electrical energy storage device (100) according to any one of claims 1 to 3, wherein the electrode body (20) is a wound electrode body in which the positive electrode (22) with a band shape and the negative electrode (24) with a band shape are stacked and wound in an insulated state.

5. The electrical energy storage device (100) according to claim 4, wherein the negative electrode active material layer (24a) has a length of 200 mm or more in a winding axis (WL) direction.

6. The electrical energy storage device (100) according to any one of claims 1 to 5, wherein a ratio (C2/C1) of the content C2 of the sodium element in the upper layer region (A2) to the content C1 of the sodium element in the lower layer region (A1) is 1.5 or more.

7. A manufacturing method for a negative electrode (24) for an electrical energy storage device (100), comprising:
a first preparing step of preparing a first paste including a negative electrode active material and a lithium salt of carboxymethyl cellulose (CMC-Li);
a second preparing step of preparing a second paste including a negative electrode active material and a sodium salt of carboxymethyl cellulose (CMC-Na);
a first forming step of forming a negative electrode lower layer (L1) by applying the first paste on a negative electrode current collector (24c); and
a second forming step of forming a negative electrode upper layer (L2) by applying the second paste on the negative electrode lower layer (L1).

8. A manufacturing method for an electrical energy storage device (100), comprising a manufacturing step of manufacturing an electrode body (20) using the negative electrode (24) manufactured by the manufacturing method according to claim 7.
